# EUROPEAN PATENT SPECIFICATION

(11) **EP 3 990 776 B1**
(45) Date of publication and mention of the grant of the patent: **07.06.2023**
(21) Application number: 20737290.5
(22) Date of filing: 26.06.2020
(51) Int. Cl.: F03D 3/00, F03D 3/06

(54) **PASSIVE VARIABLE GEOMETRY TURBINE**
TURBINE MIT PASSIVER VARIABLER GEOMETRIE
TURBINE À GÉOMÉTRIE VARIABLE PASSIVE

(30) Priority: 28.06.2019 IT 201900010479
(43) Date of publication of application: 04.05.2022
(73) Proprietor: WINDCITY Srl, 38068 Rovereto (TN) (IT)
(72) Inventor: MORBIATO, Tommaso, 38068 ROVERETO (TN) (IT)
(74) Representative: Rocchetto, Elena
(86) International application number: PCT/IB2020/056062
(87) International publication number: WO 2020/261202

(56) References cited:
- AU-B2- 631 500
- DE-B4-102010 011 708
- JP-B2- 6 505 990
- US-A- 5 083 901
- US-A1- 2016 312 765

## Description

### INTRODUCTION

This invention generally refers to energy conversion systems and, more particularly, to turbine systems immersed in any fluid, including air or water.

In particular, the present patent concerns a turbine with transverse axis with respect to the direction of the fluid and of the lift type [Darrieus (1931) US1835018, Gorlov (1998) US6155892] developed according to specific fluid dynamic profiles also known as "airfoil" (air) or "hydrofoil" (water).

In particular, the present patent relates to a turbine of the passive variable geometry type: this means that the turbine can change its geometry passively, that is, without the help of actuators powered by secondary energy sources during its normal operation but by means of the interaction with the force of the fluid itself.

Examples of this type of turbine are shown in documents US5083901A (GRIFFIN JR RALPH C ET AL) and US2012049534A1 (KIKUCHI NAOMI).

A passive variable geometry turbine like the one in this patent differs from an active variable geometry turbine, which in contrast is able to change its geometry only with the contribution of energy supplied by a secondary source and the use of sensors, actuators, motors, etc.

Examples of this type of turbine are shown in documents US2007257494A1 (VIDA MARQUES FIRMILIANO M) and DE29716129U1 (JAHNS CHRISTIAN) with air as the reference fluid, and US20100310376A1 with water as the reference fluid.

### STATE OF THE ART

R being a generic radius of rotation of a generic turbine blade, the effect of the variation of the geometry is the attainment of dynamic forces F on the blade - and therefore, the aerodynamic torques F*R - which are greater than a fixed geometry machine starting from zero RPM or at the same rotation speed w, and therefore the attainment of greater power F*R*w. Thus the use of passive variable geometry has the aim of increasing the fluid dynamic performance of the turbine in terms of energy extraction compared to a similar turbine with a fixed geometry configuration.

This effect is necessary to obtain sufficient self-starting conditions, such as for example overcoming critical inertia problems with respect to the fluid dynamic power available at low or zero rotation speeds, and is most useful in a situation in which these transient operations must be repeated often, like what happens in the presence of fluids with variable intensity and direction, that is, turbulent. This type of fluid naturally occurs for example in all urban and anthropogenic environments.

There are generally at least 3 components based on the geometry or degrees of freedom that are varied in this patent: (i) the pitch of the blades, that is, the pitch angle γ around its axis. The pitch angle γ is defined herein as the angle formed between the blade chord and the tangent to the rotation path of the blade around its axis; (ii) the rotor inertia, which is proportional to the square of the distance X of the blades themselves from the central axis of rotation, and which therefore we can characterize with the generic radius R; and (iii) the displacement angle along the circumference defined by the movement of the blade around the central rotation axis, which we define as the rotation angle ϑ.

Several patents starting from Darrieus and a significant amount of literature [Patent document no. AU631500B2 (Kirke 1998), Pawsey (2002)] indicate that while at a fully operational speed the pitch angle γ for ideal performance is 90° between the blade chord and the radius R, in contrast for the entire start-up phase a variation of γ around this last orthogonal position called γ = 0°, leads to an improvement in performance. The way to vary γ without the help of a secondary external energy source, addressed for the first time by Darrieus, is by gripping the blades in a point that generates a fluid dynamic torque with respect to the center of the fluid dynamic forces, and the use of cams or tie rods for the tip-tail connection between adjacent blades in the circumference, so as to generate a tilting effect for a period equal to one full revolution.

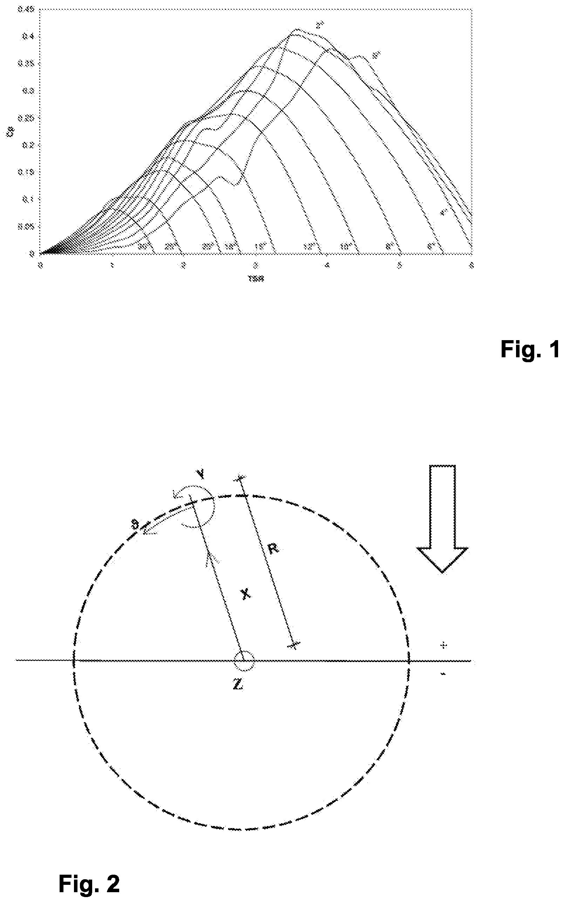

The known beneficial effects on the performance of this arrangement are shown in Figure 1, where a graph shows the expected output of a cam-driven variable tilting VAWT (vertical axis wind turbines) as the amplitude of the pitch angle γ varies between 0° and a value commonly known in the prior art equal to 30°. The abscissa shows the values of TSR ("tip speed ratio") while the ordinate shows the Cp ("power coefficient") values.

It is clear that maintaining the tilt of the pitch angle γ of the blades at any rotation speed, has beneficial effects only in the start-up phase while it has negative effects when the turbine is fully operational. From a fluid dynamic standpoint, it is as if the machine were no longer a lift based turbine but a drag based turbine: on the one hand, the self-starting capacity is obtained but on the other hand, output is reduced by more than four times when the turbine is fully operational.

US 2016/0312765 A (CONTINUUM DYNAMICS) concerns a lift-type VAWT turbine comprising a vertical shaft and blades connected to said shaft each by means of a pair of arms hinged so as to form a moving quadrilateral structure.

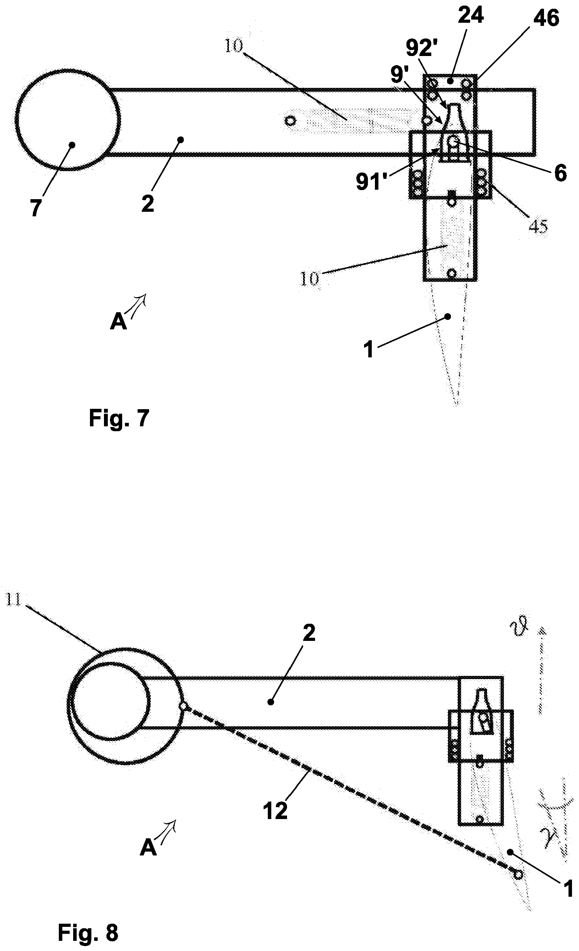

Each blade is also tilted relative to the shaft so that the upper end of the blade has a greater radius of rotation than the lower end of the blade. In the document, this angle is called *"tilt angle y"* and its function is to balance the load due to the weight of the blades themselves (Par. 0046, Figure 7).

In the turbine described in this document, the chord of the blade's aerodynamic profile forms an angle, called angle of attack α_{G}, with respect to the tangent of the blade rotation path (summary, Par. 42).

The aforementioned document describes how it is possible to set this angle of attack, but no part of the document suggests that this angle of attack may vary during the rotation of the turbine, nor that it may change passively according to other degrees of freedom, contrary to what happens in the turbine covered by this patent application.

The aforementioned document US 5083901 (Griffin et al.) describes a turbine comprising a rotating drum, which constitutes the main body of the turbine cross section, and blades of negligible dimensions with respect to the dimensions of the drum, constrained to slide radially along radial arms integral with the drum itself. The blades are arranged so that the angle of attack is substantially zero, that is, the blades are oriented tangentially to their rotation path. Those blades may be oriented with an angle of attack other than zero, for example between plus and minus 15° with respect to the tangent line (column 3, lines 50-63). This angle of attack is in any case pre-established and no part of the document suggests that this angle may vary during the rotation of the turbine, neither actively nor much less passively, for example as a function of other degrees of freedom.

### DESCRIPTION OF THE INVENTION

This patent relates to a new turbine in which the variation of the pitch angle γ is passively controlled during rotation from a maximum value at start-up to zero at full speed, exploiting the variation of one or both of the other two degrees of freedom associated with the blade, that is, X or ϑ. This effect is necessary because, as noted, the generic Darrieus machines, once started and in full operating conditions, provide their maximum output when the pitch angle γ is zero.

Thus there are at least 3 degrees of freedom involved in this patent: a main one, that is (i) the tilting of the blade around its axis determining the variation of the pitch angle γ, and two secondary ones useful for controlling the main one, for example (ii) the translation X of the blade in the radial direction R, and (iii) the displacement of the blade from its resting position in a tangential direction around the circumference, according to the rotation angle ϑ. Figure 2 schematically shows the three degrees of freedom in general, in addition to Z which is the rotation axis as well as the direction of the blades.

The pitch angle γ is defined as the angle formed between the blade chord and the line tangent to the blade rotation path. Since the arm 2 that connects each blade 1 to the shaft 7 is orthogonal to the shaft 7 itself, the variation of the pitch angle γ actually defines the tilting angle of the blade 1 with respect to the shaft 7.

The arrow indicates the direction of the flow (W) of the fluid in general, the + symbol indicates the "upstream" position, while the - symbol indicates the "downstream" position.

When the fluid is air, the centrifugal force during operation is much greater than the fluid dynamic forces to the point that it is able to vary X along R, and therefore the degree of freedom X is used to control the pitch angle γ.

Furthermore, the inertia of the machine, given the small force exerted by the wind in all transient conditions, has a significant weight in defining the motion to the point of being critical: in fact, in a generic condition of dynamic equilibrium, opposing forces are at play including aerodynamic forces governed by F*R, electrical forces governed by the load, and inertial forces governed by M^{∗}R^2, where M is the mass of the turbine mainly determined by the mass of the blades. For these reasons, the turbine covered by this patent includes:
- at start-up, the maximum freedom of γ associated with the minimum values of X and therefore of R,
- under fully operating conditions, the zeroing of the freedom of γ associated with the maximum values of X and therefore of R.

When the fluid is water, the dynamic forces are much greater than the centrifugal force during operation, and therefore the degree of freedom ϑ that the tangential fluid dynamic component is able to vary along the circumference, in order to control the pitch angle γ, is used.

### EMBODIMENTS OF THE INVENTION

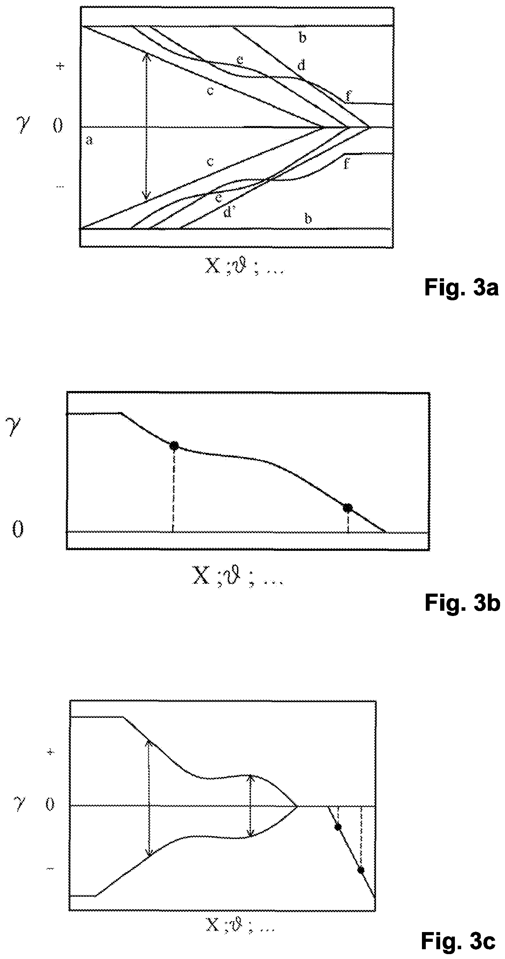

One embodiment proposed in this patent to control the degree of freedom of the pitch angle γ in the presence of the other 2 degrees of freedom X or ϑ is to use guides with variable section or elements having variable play, with linear or non-linear variation depending on X or ϑ, which can be made as explained below in order to produce the following effects described in Figures 3. Figure 3a describes the different passive variation classes related to the pitch angle γ as a function of X , ϑ according to the embodiments described below, and in particular those which provide for free tilting with the torques created by the fluid with respect to the grip points of the blades in the upstream and downstream positions, where:
a. represents the reference case with a fixed pitch angle γ independently of X, ϑ, that is, a conventional fixed geometry machine
b. represents the reference case with the variability of the pitch angle γ with no relation to X, ϑ, - as regards γ - that is, as in the case in Figure 1 or in the Darrieus patent (1931)
c. represents the case of a generic linear relationship with X, ϑ in which the effects obtained are the same for the upstream and downstream positions (a decrease as X, ϑ increases which is useful according to the description of the invention, even if in principle it can also be obtained by changing the variation rate)
d. represents the case of a relationship in which the initial value of X, ϑ can be different between the upstream and downstream positions (curves d and d') in which the variation of the effect is noticeable, and/or the variation rate represented by the inclination of the straight line
e. represents the case of a relationship having any mathematical condition as a function of X, ϑ. In general, as in case d, there may also be different variation rules e, e' between the upstream and downstream positions
f. represents the case in which a residual non-zero value of γ may remain for the highest values of X, ϑ. In general, as in case d, there may also be different variation rules f, f between the upstream and downstream positions.

Figure 3b describes the case in which the passive variation of the pitch angle γ as a function of X, ϑ obtained according to any of the generic embodiments a, b, c, d, e, f described in Figure 3a is not free with respect to the flow, but is controlled and assumes and unique position γ given a value of X, ϑ for each relative position of the blade with respect to the fluid flow (upstream or downstream) during rotation.

Figure 3c describes a hybrid of the cases in Figure 3a and Figure 3b, in which, for a certain select range of the intervals of X, ϑ the blade behaves like in any one of the generic embodiments a, b, c, d, e, f described in Figure 3a, while for a further range it behaves like in Figure 3b. Figure 3c shows for brevity and usefulness only the case in which the behavior in Figure 3b is the same as that in Figure 3a, while the behavior in Figure 3a may also be the same as that in Figure 3b.

The usefulness of the embodiment in Figure 3c, which is the subject of the present invention, lies in obtaining a passive fluid-dynamic brake of a machine operating under high speeds of rotation: in fact, after the low values of X, ϑ under low speeds of rotation where the pitch angle γ is large, the machine goes into higher speeds of rotation with higher values of X, ϑ in which the machine is fully operational and therefore the pitch angle γ is minimal or zero, up to where the speed of rotation is too high - right section of Figure 3c -, thus forcing the pitch angle γ to higher values again with a profile like Figure 3b will result in a beneficial slowdown of the machine, in this case advantageously using the characteristic which in the case of fixed pitch angles, was actually not advantageous as described in Figure 1.

### Embodiments of Figures 3 by mechanical components of elements having variable play or guides with variable section as a function of X or -&:

### 1) Turbine in low density fluid, such as air

When the fluid is air, the turbine is configured in such a way that the blade has a degree of freedom of its pitch angle γ according to its distance from the rotation axis, that is, as a function of X.

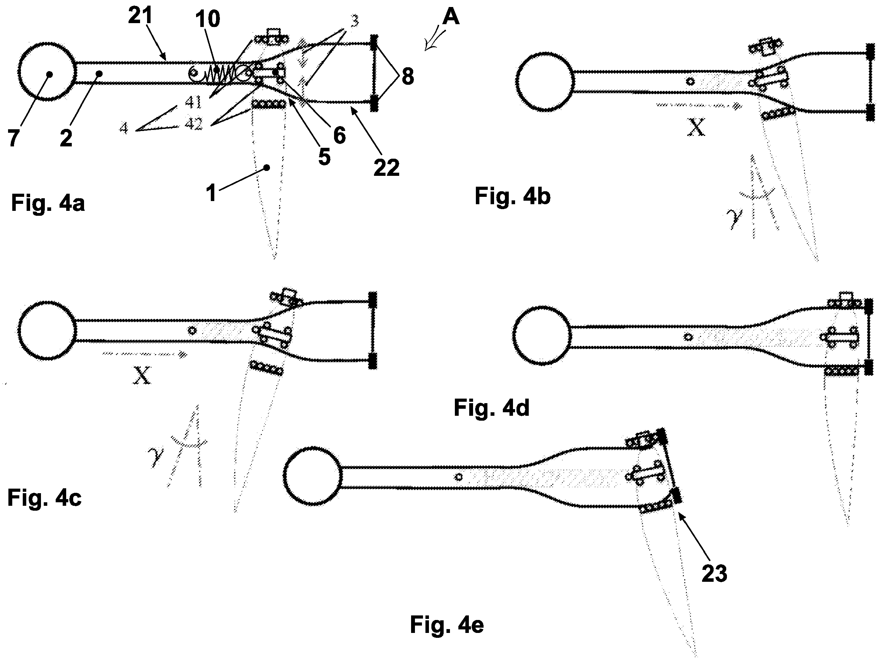

Figure 4a shows an example in which the generic blade (1) translates along the arm (2) which is placed at the end or central position or any position along the blade.

Said blade translates along the arm (2) with a variable play which is based on the distance (3) between each of the two opposite walls of the arm (2) and two pairs of sliding carriages (4), where more specifically a first pair of carriages (41) is on the inner side of the blade (1) and a second pair (42) is on the outer side of the blade (1). In each pair of carriages (41) (42), one is installed at the through hole (5) made on the blade (1) to allow the passage of the arm (2), while the other is part of a frame (6) integral with and on the inner side of the blade (1). This frame (6) is the grip point of the blade (1), which is advantageously smaller than the aerodynamic center of the blade profile (usually ¼ of the chord), so as to create a torque effect provided by the resulting aerodynamic forces for the lever arm, equal to the distance between the aerodynamic center and the grip point. In a first part (21) closer to the rotation axis (7) the arm (2) has a smaller width, thus enabling the variation of the pitch angle γ of the blade (1), while in a second more external part (22) it has a greater width, preventing any variation of the pitch angle γ. The blade (1) can increase its distance X from the axis (7) up to a maximum value determined by a stop element (8). Therefore, as shown in the embodiment in Figure 4a, as the play (3) varies, it is possible to control the pitch angle γ as a function of the distance X from the axis (7).

Figures 4b and 4c show how the pitch angle γ varies in the upstream position (Figure 4c) and downstream position (Figure 4b) at a given distance X from the axis (7) inside the portion (21) of the arm; Figure 4d shows how the pitch angle γ stops varying after a certain distance X from the axis (7) in said second portion (22) of the arm; Figure 4e shows how it is possible to implement the passive control of the pitch angle γ as a function of the distance X in the hybrid embodiment described in Figure 3c: in addition to the portion (21) and portion (22) of the arm (2) with curved and discordant edges that result in the free variation of the pitch angle γ thanks to the torques generated by the fluid with respect to the grip point of the blade (1), a further portion (23) of the arm (2) is in fact created with curved but concordant edges where the blade (1) is in a single fixed position with a certain pitch angle γ at a certain distance X, without tilting during rotation.

Therefore the curves in Figures 3 represent, in general, the different shapes that can be obtained according to the present invention as in Figures 4 in order to modify the pitch angle γ as a function of the distance X from the axis (7).

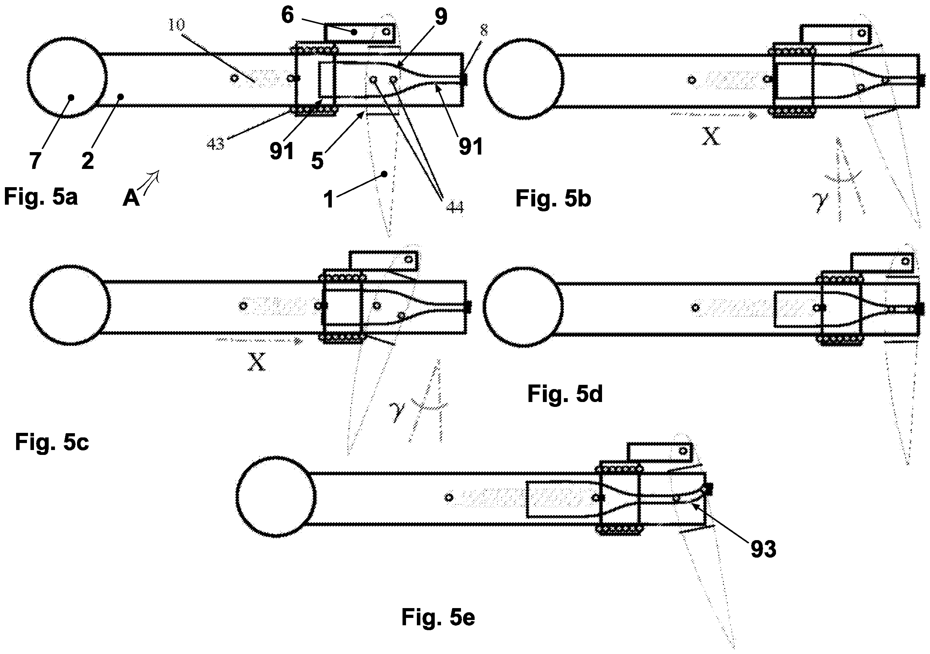

Figure 5a shows a further embodiment of this invention in which the generic blade (1) translates along the arm (2) which is placed in an end or central position or any position along the blade, following a carriage (43) which slides on said arm (2) which is substantially rectilinear and to which the blade (1) is indirectly integral by means of the grip frame (6). This frame (6) is the grip point of the blade (1), advantageously smaller than the aerodynamic center of the blade profile (usually ¼ of the chord), so as to create a torque effect provided by the resulting aerodynamic forces for the lever arm, equal to the distance between the aerodynamic center and the grip point. At the same time, through the hole (5) on the blade (1) the latter can vary its pitch angle γ since an additional carriage (44) integral with and internal to the blade (1) can move through a variable section guide (9) present in the arm (2), where said guide (9) is substantially rectilinear along the arm (2) and has a variable width. In a first portion (91) closer to the rotation axis (7) it has a greater width, thus allowing the variation of the pitch angle γ of the blade (1) as illustrated in Figures 5b and 5c, while in a second further outward portion (92) it has a smaller width, preventing any variation of the pitch angle γ as illustrated in Figure 5d.

Figure 5e shows how it is possible to passively control the pitch angle γ as a function of the distance X like the hybrid embodiment described in Figure 3c: in addition to the portion (91) and portion (92) of the guide (9) with curved and discordant edges that result in the free variation of the pitch angle γ thanks to the torques generated by the fluid with respect to the grip point of the blade (1), a further third portion (93) of the guide (9) is created with curved but concordant edges where said blade (1) is in a single fixed position with a certain pitch angle γ at a certain distance X from the axis, without tilting during rotation.

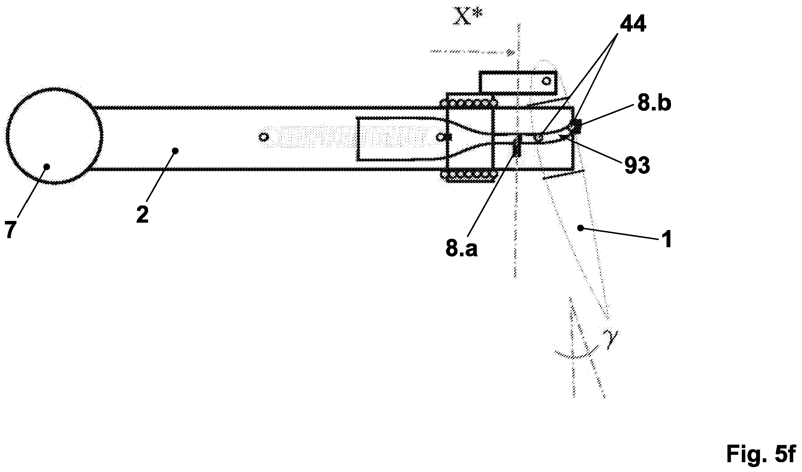

Figure 5f shows how it is possible to create a fluid dynamic brake according to the principles described for Figure 3c. In particular, the blade (1) which rotates during operation due to a given centrifugal force is held at a pitch angle γ equal to zero and therefore in correspondence with a certain radius X* in the portion (92) of the guide, by a stop element (8.a) made for example by a pin with elastic characteristics provided for example by a spring placed between the pin and the edge of the arm (2). The stop element (8.a), given its elasticity and for example the shape with which the pin meets the guide (92), can retract laterally allowing the carriage (44) to pass from the position of radius X* towards the portion (93) of the guide equipped with a second stop element (8.b) which, unlike the stop element (8.a), is fixed. The passage of the carriage (44) will occur naturally during operation when the centrifugal force, for example, exceeds a higher threshold value.

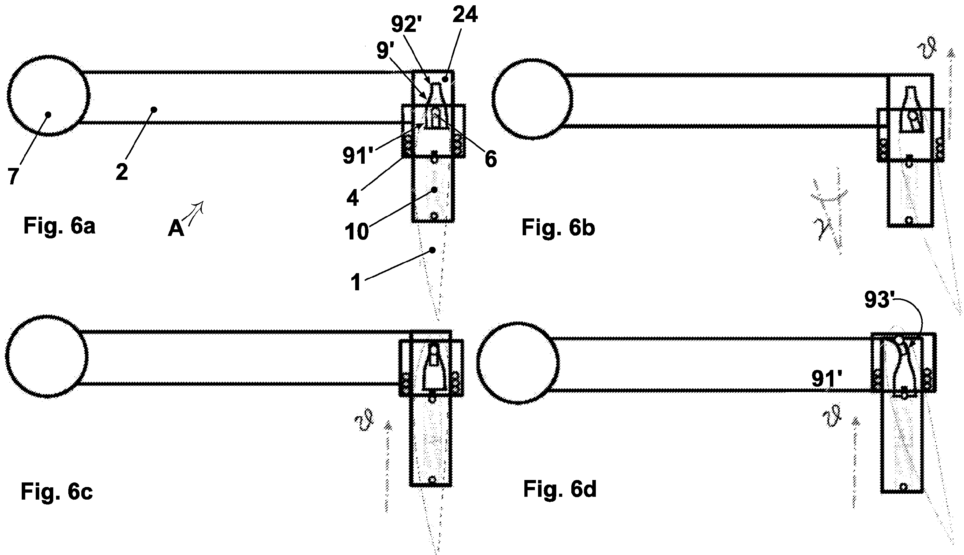

This threshold value is a function of the elastic characteristics of the stop element (8.a). Therefore, the above described the embodiment of a passive fluid-dynamic brake which comes into operation after exceeding a certain centrifugal force, or a certain rotation speed of the blade (1). This device can also be made in the same way in the case of Figure 6 for high density fluids, such as for example water, to be described below.

Therefore the curves in Figures 3 represent, in general, the different embodiments that can be implemented according to the present invention as in Figures 5 in order to modify the pitch angle γ as a function of the distance X from the axis (7).

As an alternative to said carriages (41, 42, 43, 44) shown in the figures, said blade (1) can be attached to the relative arm (2) and slide with respect to it by means of a plurality of possible sliding mechanical means, such as wheels, recirculating ball bearing guides, and the like.

### 2. Turbine in high density fluids, such as water

In the case of a high density fluid such as water, the turbine is configured so that the blade has a degree of freedom of its pitch angle γ able to vary according to the rotation angle ϑ.

Figure 6 shows an embodiment of the present invention in which the arm (2) which is placed in an end or central position or in any other position along the blade, has a terminal housing (24) elongated in the direction of ϑ and containing a guide (9') with a variable cross section which is wider in a first portion (91') further away from the inner side of the blade (1) and narrower in a second portion (92') closer to the inner side of the blade (1). By means of the elongated pin (6) exiting the blade (1) it is possible to control the variation of the pitch angle γ from a maximum value in correspondence with said first portion (91) to zero in correspondence with said second portion (92'). Finally, the blade (1) in this configuration is connected to the arm terminal housing (24) by means of a carriage (4) which leaves the degree of freedom ϑ free, in addition to the pitch angle γ by means of a pin (6) passing through said carriage (4).

Said pin (6), determines the grip point of the blade (1), which will be chosen advantageously smaller than the fluid dynamic center of the blade profile (usually ¼ of the chord), so as to generate a torque effect provided by the resulting fluid dynamic forces for the lever arm, equal to the distance between the aerodynamic center and the grip point.

Figure 6d shows how it is possible to implement the passive control of the pitch angle γ as a function of the rotation ϑ like the hybrid embodiment described in Figure 3c: in addition to said first and second portions (91') and (92') of the guide (9') with curved and discordant edges that generate a free variation of the pitch angle γ thanks to the torques generated by the fluid with respect to the grip point of the blade (1), a further third portion (93') of the guide (9') is created with curved but concordant edges where said blade (1) is in a single fixed position with a certain pitch angle γ at a certain tip speed ϑ', without tilting during rotation.

In this way, the embodiment is specially configured so that the blade (1) can vary the pitch angle γ as a function of the rotation ϑ.

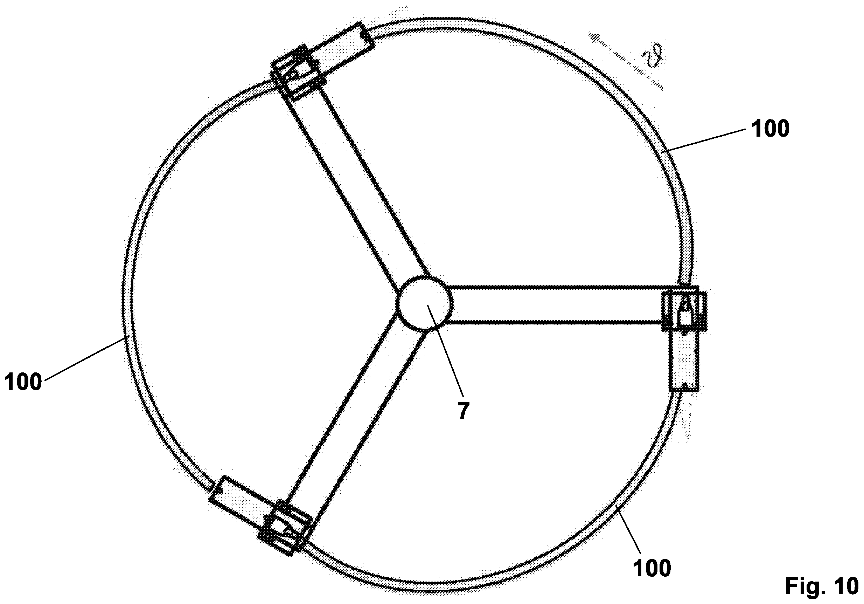

Figure 10 shows how it is possible to provide for arcuate profiles (100) between one blade and the next, so as to standardize the operation of the mechanics previously described with respect to the rotation ϑ as much as possible: in fact, once a direction of the fluid has been set, the characteristics of the fluid dynamic thrust vary as a function of the angle ϑ, therefore the behavior of the different blades (1) in a given instant can be advantageously standardized by the connection profiles (100) shown in Figure 10.

A further precaution which may be taken into consideration in dense fluids is the modification of the joint between the elongated pin (6) and the guide (9) so as to limit the friction involved, for example by providing wheels or other means to facilitate sliding between the surfaces of pin (6) and guide (9).

### 3. Turbine in a fluid of any density

In a generic fluid, the turbine is preferably configured so that the blade has a variable degree of freedom of the pitch angle γ both as a function of the distance X from the axis and as a function of the rotation angle ϑ.

Figure 7 shows such an embodiment in which the carriage (4) in Figure 6 splits into a sliding element coupled in series in which the carriages (45) and (46) are located one above the other or vice versa: while carriage (45) performs the same function assigned in Figure 6, carriage (46) allows the arm terminal housing (24) to slide along the arm (2) as it was for the elements (43)-(6) in Figure 5.

As shown in Figures 4, 5, 6, 7, the variation of the degrees of freedom X or ϑ which are independent in their integration with the degree of freedom γ, is in turn dynamically controlled in a passive manner by opposing means (elastic or springs, etc.) (10) which partially oppose the movement of the degrees of freedom X or ϑ up to a maximum value or to a stop element (8). By ensuring that the opposing means (10) remain within the elastic range, all the geometric situations described are reversible dynamic situations, and therefore occur periodically and continuously during the acceleration as well as during the deceleration of the generic turbine depending on the fluid flow rate.

With regard to the degree of freedom X, that is, the distance from the axis, said opposing means (10) counteract the centrifugal force, while, with regard to the degree of freedom ϑ, that is, the angle of rotation, said opposing means counteract the fluid dynamic force which tends to move the blade in a circumferential direction and therefore to rotate the turbine.

### 4. Cam-driven turbine (Figure 8)

For some uses such as in relatively low density fluids and in the presence of high rotation speeds, it is possible to advantageously combine a configuration of the present invention as described in Figure 6, with a blade (1) which can vary the pitch angle γ as a function of the rotation ϑ, with a set of cams (11) and rigid tie rods (12) so as to counteract the centrifugal force acting on the blade (1).

### 5. Turbine with coupled blades

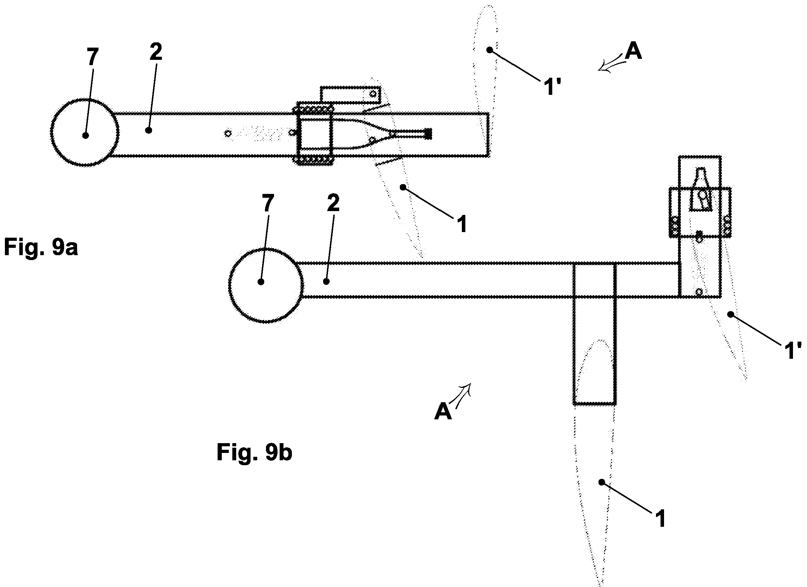

On the basis of the known principle according to which a fluid passing between two close profiles creates an acceleration effect resulting in greater performance (also known as the Venturi effect) by the profiles, the embodiments described in the present patent can also be used to make sets of more than one blade placed close enough to form systems in which, for each set, at least one element is configured based on a passive variable geometry according to the present invention, as described for example in two of the different possible configurations in Figures 9a and 9b.

In this embodiment, turbine (A) comprises a further auxiliary blade (1') constrained to said shaft (2) in a position close to said blade (1), and where at least one of said blade (1) and said auxiliary blade (1') is constrained to the relative arm (2) so as to selectively vary the pitch angle γ, that is, the tilt angle of the blade (1) with respect to the main direction of said arm (2), and where each arm (2) is configured so that said pitch angle γ of each blade (1) varies as a function of the distance X of the blade (1) itself from said shaft (7) and/or as a function of the tangential displacement or rotation angle ϑ of the blade (1) with respect to the relative arm (2).

## Claims

1. Turbine (A) of the lift type, suited to be placed into any fluid, the turbine comprising a shaft or rotation axis (7) suited to be positioned in space in any way and N blades (1) defining the radius of the rotor and constituting the main mass of the cross section of the turbine (A), while said shaft or axis (7) has a substantially elongated shape with negligible radius with respect to the radius of the rotor, each of said blades (1) being indirectly constrained to said shaft or axis (7) by means of one or more radial arms (2) which are in turn integral with said axis (7), wherein each one of said blades (1) is constrained to the corresponding arm (2) so that it is possible to selectively vary the pitch angle γ, that is, the angle formed between the blade chord and the tangent to the blade rotation trajectory,
and wherein each arm (2) is configured so that said pitch angle γ of each blade (1) varies according to the distance X of the blade (1) itself from said shaft (7) and/or according to the tangential displacement or rotation angle ϑ of the blade (1) with respect to the corresponding arm (2),
and wherein said arm (2) has a variable section or guides with variable section or elements having variable play, with linear or non-linear variation depending on the distance X from the shaft (7) and/or depending on the tangential displacement or rotation angle ϑ.

2. Turbine (A) according to claim 1, for low density fluids such as air, **characterized in that** at least one of said blades (1) translates radially along the corresponding arm (2) due to the centrifugal force, and wherein the tilting angle γ of said blade (1) varies according to the distance of the blade (1) itself from said shaft (7).

3. Turbine (A) according to claim 2, for low density fluids such as air, **characterized in that** said blade (1) has a through hole (5) in which said arm (2) is inserted, and wherein said blade (1) translates along the arm (2) with a play determined by the distance (3) between the edges of the arm (2) and the edges of said hole (5), and wherein said arm (2) has variable width and in particular:
- a first part (21) of the arm (2) closer to the rotation axis (7) is narrower, thus allowing the variation of the pitch angle γ of the blade (1),
- a second outer part (22) of the arm is wider, preventing any variation of the pitch angle γ.

4. Turbine (A) according to claim 3, **characterized in that** said arm (2) comprises a further part (23) with concordant and curved edges, whose width is such that said blade (1) assumes a single fixed position with a given angle γ at a given distance X, without oscillating during rotation.

5. Turbine (A) according to claim 2, for low density fluids like air, **characterized in that** said blade (1) translates along the arm (2) sliding along a variable section guide (9) made in said arm (2) in the longitudinal direction of extension of the arm (2) itself, and wherein said guide has variable width and in particular:
- a first part (91) of the guide (9) closer to the rotation axis (7) is wider, thus allowing the variation of the tilting angle γ of the blade (1),
- a second outer part (92) of the guide (9) is narrower, preventing any variation of the pitch angle γ.

6. Turbine (A) according to claim 5, **characterized in that** said guide (9) comprises a further third part (93) with concordant and curved edges, whose width is such that said blade (1) assumes a single fixed position with a given angle γ at a determined distance X from the axis (7), without oscillating during rotation.

7. Turbine (A) according to one of the claims from 3 to 6, **characterized in that** said blade (1) is constrained to the corresponding arm (2) and slides with respect to it by means of a plurality of mechanical means, such as wheels, recirculating ball bearing linear guides, carriages, etc.

8. Turbine (A) according to claim 1, for water or fluids with density similar to that of water, **characterized in that** at least one of said blades (1) translates in a tangential direction with respect to the circumference determined by the rotation of the corresponding arm (2) due to the effect of the fluid-dynamic force, and wherein the pitch angle γ of said blade (1) varies according to said tangential displacement, that is, of said rotation angle ϑ of the blade (1) itself.

9. Turbine (A) according to claim 8, **characterized in that** said arm (2) is provided with a terminal housing (24) elongated in the direction of ϑ and comprising a guide (9') inside which said blade (1) slides, and wherein said guide (9') has variable cross section and in particular:
- a first section (91') farther from the incoming edge of the blade (1) is wider, thus allowing the variation of the pitch angle γ of the blade (1);
- a second section (92') closer to the incoming edge of the blade (1) is narrower, preventing any variation of the pitch angle γ.

10. Turbine (A) according to claim 9, **characterized in that** said guide (9') comprises a further third section (93') of the guide (9') with curved and concordant edges, whose width is such that said blade (1) assumes a single fixed position with a certain angle γ, given a certain tip speed 3', without oscillating during rotation.

11. Turbine (A) according to one of the claims from 2 to 10, **characterized in that** at least one of said blades (1) is constrained to the corresponding arm (2) by means of at least one counteracting means (10) suited to counteract said radial translation of the blade (1) in the direction away from the axis (7) and/or said tangential displacement of the blade (1) with respect to the circumference determined by the rotation of the corresponding arm (2).

12. Turbine (A) according to the preceding claims, for fluids with any density, **characterized in that** at least one of said blades (1) translates:
- radially along the corresponding arm (2) due to the effect of the centrifugal force, and wherein the pitch angle γ of said blade (1) varies according to the distance of the blade (1) itself from said shaft (7),
and also
- tangentially with respect to the circumference determined by the rotation of the corresponding arm (2) due to the effect of the fluid-dynamic force, and wherein the pitch angle γ of said blade (1) varies according to said tangential displacement, that is, of said rotation angle ϑ of the blade (1) itself.

13. Turbine (A) according to any of the preceding claims, for fluids with any density, **characterized in that** it comprises a set of cams (11) and rigid tie rods (12) connected to said blade (1) and suited to counteract the centrifugal force acting on the blade (1).

14. Turbine (A) according to any of the preceding claims, for fluids with any density, **characterized in that** it comprises a further auxiliary blade (1') constrained to said shaft (7) in a position close to said blade (1), and wherein at least one between said blade (1) and said auxiliary blade (1') is constrained to the corresponding arm (2) so that it is possible to selectively vary the pitch angle γ, that is, the angle of inclination of the blade (1) with respect to the main direction of said arm (2), and wherein each arm (2) is configured so that said pitch angle γ of each blade (1) varies according to the distance X of the blade (1) itself from said shaft (7) and/or according to the tangential displacement or angle of rotation ϑ of the blade (1) with respect to the corresponding arm (2).

15. Turbine (A), according to the preceding claims, for fluid of any density, **characterized in that** each arm (2) comprises at least one selective stop element (8.a) suited to limit the translation of the blade (1) at a certain distance X* up to a certain threshold value of centrifugal force, and wherein, after exceeding this threshold value, said selective stop element (8.a) is configured to release said blade (1) which runs along a portion (93) of said guide (9) configured so as to vary the pitch angle γ of said blade (1) and place it in a fluid dynamic brake position.

16. Turbine (A), according to the preceding claims, for any density fluid, **characterized in that** it comprises connection profiles (100) between consecutive blades, such as to standardize the behavior of the blades (1) depending on the operating conditions.

## Patentansprüche

1. Turbine (A) vom Auftriebstyp, die geeignet ist, in einem beliebigen Fluid angeordnet zu werden, wobei die Turbine eine Welle oder Drehachse (7), die geeignet ist, auf beliebige Weise im Raum positioniert zu werden, und N Schaufeln (1) umfasst, die den Radius des Rotors definieren und die Hauptmasse des Querschnitts der Turbine (A) bilden, während die besagte Welle oder Achse (7) eine im Wesentlichen längliche Form mit vernachlässigbarem Radius in Bezug auf den Radius des Rotors aufweist, wobei jede der besagten Schaufeln (1) indirekt an der besagten Welle oder Achse (7) mittels eines oder mehrerer radialer Arme (2) befestigt ist, die ihrerseits einstückig mit der besagten Achse (7) sind, wobei jede der besagten Schaufeln (1) an dem entsprechenden Arm (2) befestigt ist, sodass es möglich ist, den Steigungswinkel γ, d.h. den Winkel, der zwischen der Schaufelsehne und der Tangente an die Schaufelrotationsbahn gebildet wird, selektiv zu verändern,
und wobei jeder Arm (2) so konfiguriert ist, dass der besagte Steigungswinkel γ jeder Schaufel (1) in Abhängigkeit vom Abstand X der Schaufel (1) selbst von der besagten Welle (7) und/oder in Abhängigkeit vom tangentialen Verdrängungs- oder Drehwinkel ϑ der Schaufel (1) in Bezug auf den entsprechenden Arm (2) variiert,
und wobei der besagte Arm (2) einen variablen Abschnitt oder Führungen mit variablem Abschnitt oder Elementen mit variablem Spiel aufweist, mit linearer oder nichtlinearer Veränderung in Abhängigkeit vom Abstand X von der Welle (7) und/oder in Abhängigkeit vom tangentialen Verdrängungs- oder Drehwinkel ϑ.

2. Turbine (A) nach Patentanspruch 1 für Fluide mit geringer Dichte, wie z.B. Luft, **dadurch gekennzeichnet, dass** sich mindestens eine der besagten Schaufeln (1) aufgrund der Zentrifugalkraft radial entlang des entsprechenden Arms (2) verschiebt, und wobei der Kippwinkel γ der besagten Schaufel (1) in Abhängigkeit vom Abstand der Schaufel (1) selbst von der besagten Welle (7) variiert.

3. Turbine (A) nach Patentanspruch 2 für Fluide mit geringer Dichte, wie z.B. Luft, **dadurch gekennzeichnet, dass** die besagte Schaufel (1) ein durchgehendes Loch (5) aufweist, in das der besagte Arm (2) eingesetzt ist, und wobei sich die besagte Schaufel (1) entlang des Arms (2) mit einem Spiel verschiebt, das durch den Abstand (3) zwischen den Rändern des Arms (2) und den Rändern des besagten Lochs (5) bestimmt wird, und wobei der besagte Arm (2) eine variable Breite aufweist und insbesondere:
- ein erster Teil (21) des Arms (2), der sich näher an der Drehachse (7) befindet, ist schmaler, sodass der Anstellwinkel γ der Schaufel (1) variiert werden kann,
- ein zweiter äußerer Teil (22) des Arms ist breiter und verhindert jede Veränderung des Steigungswinkels γ.

4. Turbine (A) nach Patentanspruch 3, **dadurch gekennzeichnet, dass** der besagte Arm (2) einen weiteren Teil (23) mit übereinstimmenden und gekrümmten Rändern umfasst, dessen Breite so ist, dass die besagte Schaufel (1) eine einzige feste Position mit einem gegebenen Winkel γ in einem gegebenen Abstand X einnimmt, ohne während der Drehung zu schwingen.

5. Turbine (A) nach Patentanspruch 2 für Fluide mit geringer Dichte wie Luft, **dadurch gekennzeichnet, dass** sich die besagte Schaufel (1) entlang des Arms (2) verschiebt, wobei sie entlang einer Führung (9) mit variablem Querschnitt gleitet, die in dem besagten Arm (2) in der Längsrichtung der Ausdehnung des Arms (2) selbst ausgebildet ist, und wobei die besagte Führung eine variable Breite hat und insbesondere:
- ein erster Teil (91) der Führung (9), der sich näher an der Drehachse (7) befindet, ist breiter, sodass der Kippwinkel γ der Schaufel (1) variiert werden kann,
- ein zweiter äußerer Teil (92) der Führung (9) ist schmaler und verhindert jede Veränderung des Steigungswinkels γ.

6. Turbine (A) nach Patentanspruch 5, **dadurch gekennzeichnet, dass** die besagte Führung (9) einen weiteren dritten Teil (93) mit übereinstimmenden und gekrümmten Rändern umfasst, dessen Breite so ist, dass die besagte Schaufel (1) eine einzige feste Position mit einem gegebenen Winkel γ in einem gegebenen Abstand X einnimmt, ohne während der Drehung zu schwingen.

7. Turbine (A) nach einem der Patentansprüche 3 bis 6, **dadurch gekennzeichnet, dass** die besagte Schaufel (1) an dem entsprechenden Arm (2) befestigt ist und in Bezug auf diesen mittels einer Vielzahl mechanischer Mittel, wie Räder, kugelgelagerte Linearführungen, Schlitten usw., gleitet.

8. Turbine (A) nach Patentanspruch 1 für Wasser oder Fluide mit ähnlicher Dichte wie Wasser, **dadurch gekennzeichnet, dass** sich mindestens eine der besagten Schaufeln (1) aufgrund der Wirkung der fluiddynamischen Kraft in einer tangentialen Richtung in Bezug auf den durch die Drehung des entsprechenden Arms (2) bestimmten Umfang verschiebt, und wobei sich der Steigungswinkel γ der besagten Schaufel (1) entsprechend der besagten tangentialen Verdrängung, d.h. des besagten Drehwinkels ϑ der Schaufel (1) selbst, ändert.

9. Turbine (A) nach Patentanspruch 8, **dadurch gekennzeichnet, dass** der besagte Arm (2) mit einem Endgehäuse (24) versehen ist, das sich in Richtung ϑ erstreckt und eine Führung (9') aufweist, in der die besagte Schaufel (1) gleitet, und wobei die besagte Führung (9') einen variablen Querschnitt aufweist und insbesondere:
- ein erster Abschnitt (91'), der weiter von der Eintrittskante der Schaufel (1) entfernt ist, ist breiter und ermöglicht so die Veränderung des Steigungswinkels γ der Schaufel (1),
- ein zweiter Abschnitt (92'), der sich näher an der Eintrittskante der Schaufel (1) befindet, ist schmaler und verhindert jede Veränderung des Steigungswinkels γ.

10. Turbine (A) nach Patentanspruch 9, **dadurch gekennzeichnet, dass** die besagte Führung (9') einen weiteren dritten Teil (93') der Führung (9') mit übereinstimmenden und gekrümmten Rändern umfasst, dessen Breite so ist, dass die besagte Schaufel (1) eine einzige feste Position mit einem gegebenen Winkel γ bei einer bestimmten Spitzengeschwindigkeit ϑ' einnimmt, ohne während der Drehung zu schwingen.

11. Turbine (A) nach einem der Patentansprüche 2 bis 10, **dadurch gekennzeichnet, dass** mindestens eine der besagten Schaufeln (1) mittels mindestens eines Gegenwirkungsmittels (10), das geeignet ist, der besagten radialen Verschiebung der Schaufel (1) in Richtung weg von der Achse (7) und/oder der besagten tangentialen Verdrängung der Schaufel (1) in Bezug auf den durch die Drehung des entsprechenden Arms (2) bestimmten Umfang entgegenzuwirken, an dem entsprechenden Arm (2) befestigt ist.

12. Turbine (A) nach den vorhergehenden Patentansprüchen für Fluide beliebiger Dichte, **dadurch gekennzeichnet, dass** mindestens eine der besagten Schaufeln (1) sich verschiebt:
- radial entlang des entsprechenden Arms (2) aufgrund der Wirkung der Zentrifugalkraft, und wobei der Steigungswinkel γ der besagten Schaufel (1) in Abhängigkeit vom Abstand der Schaufel (1) selbst von der besagten Welle (7) variiert,
und auch
- tangential in Bezug auf den Umfang, der durch die Drehung des entsprechenden Arms (2) aufgrund der Wirkung der fluiddynamischen Kraft bestimmt wird, und wobei der Steigungswinkel γ der besagten Schaufel (1) in Abhängigkeit von der besagten tangentialen Verdrängung, d.h. des besagten Drehwinkels ϑ der Schaufel (1) selbst, variiert.

13. Turbine (A) nach einem der vorhergehenden Patentansprüche für Fluide beliebiger Dichte, **dadurch gekennzeichnet, dass** sie einen Satz von Nocken (11) und starren Zugstangen (12) umfasst, die mit der besagten Schaufel (1) verbunden und geeignet sind, der auf die Schaufel (1) wirkenden Zentrifugalkraft entgegenzuwirken.

14. Turbine (A) nach einem der vorhergehenden Patentansprüche für Fluide beliebiger Dichte, **dadurch gekennzeichnet, dass** sie eine weitere Hilfsschaufel (1') umfasst, die an der besagten Welle (7) in einer Position nahe an der besagten Schaufel (1) befestigt ist, und wobei mindestens eine zwischen der Schaufel (1) und der besagten Hilfsschaufel (1') an dem entsprechenden Arm (2) befestigt ist, sodass es möglich ist, den Steigungswinkel γ selektiv zu variieren, d.h. den Neigungswinkel der Schaufel (1) in Bezug auf die Hauptrichtung des besagten Arms (2), zu variieren, und wobei jeder Arm (2) so konfiguriert ist, dass der besagte Steigungswinkel γ jeder Schaufel (1) in Abhängigkeit vom Abstand X der Schaufel (1) selbst von der besagten Welle (7) und/oder in Abhängigkeit von der tangentialen Verdrängung oder dem Drehwinkel ϑ der Schaufel (1) in Bezug auf den entsprechenden Arm (2) variiert.

15. Turbine (A) nach den vorhergehenden Patentansprüchen für ein Fluid beliebiger Dichte, **dadurch gekennzeichnet, dass** jeder Arm (2) mindestens ein selektives Anschlagelement (8.a) umfasst, das geeignet ist, die Verschiebung der Schaufel (1) in einem bestimmten Abstand X* bis zu einem bestimmten Schwellenwert der Zentrifugalkraft zu begrenzen, und wobei nach Überschreiten dieses Schwellenwertes das besagte selektive Anschlagelement (8.a) so konfiguriert ist, dass es die besagte Schaufel (1) freigibt, die entlang eines Abschnitts (93) der besagten Führung (9) läuft, der so konfiguriert ist, dass sie den Steigungswinkel γ der besagten Schaufel (1) verändert und sie in eine fluiddynamische Bremsposition bringt.

16. Turbine (A) nach den vorhergehenden Patentansprüchen für ein Fluid beliebiger Dichte, **dadurch gekennzeichnet, dass** sie Verbindungsprofile (100) zwischen aufeinanderfolgenden Schaufeln aufweist, um das Verhalten der Schaufeln (1) in Abhängigkeit von den Betriebsbedingungen zu standardisieren.

## Revendications

1. Turbine (A) du type élévateur, adaptée pour être placée dans n'importe quel fluide, la turbine comprenant un arbre ou un axe de rotation (7) indiqué pour être positionné dans l'espace de n'importe quelle manière et N pales (1) définissant le rayon du rotor et constituant la masse principale de la section transversale de la turbine (A), tandis que ledit arbre ou axe (7) présente une forme sensiblement allongée avec un rayon négligeable par rapport au rayon du rotor, chacune desdites pales (1) étant indirectement bloquée sur ledit arbre ou axe (7) au moyen d'un ou plusieurs bras radiaux (2) qui sont à leur tour solidaires dudit axe (7), où chacune desdites pales (1) est bloquée sur le bras correspondant (2) de sorte qu'il est possible de varier sélectivement l'angle de pas γ, c'est-à-dire l'angle formé entre la corde de la pale et la tangente à la trajectoire de rotation de la pale,
et où chaque bras (2) est configuré de sorte que ledit angle de pas γ de chaque pale (1) varie en fonction de la distance X de la pale (1) elle-même dudit arbre (7) et/ou en fonction du déplacement tangentiel ou de l'angle de rotation ϑ de la pale (1) par rapport au bras correspondant (2),
et où ledit bras (2) présente une section variable ou des guides avec une section variable ou des éléments ayant un jeu variable, avec une variation linéaire ou non linéaire selon la distance X de l'arbre (7) et/ou selon le déplacement tangentiel ou l'angle de rotation ϑ.

2. Turbine (A) selon la revendication 1, pour des fluides à faible densité tels que l'air, **caractérisée en ce qu'**au moins une desdites pales (1) se déplace radialement le long du bras correspondant (2) en raison de la force centrifuge, et où l'angle de basculement γ de ladite pale (1) varie en fonction de la distance de la pale (1) elle-même par rapport audit arbre (7).

3. Turbine (A) selon la revendication 2, pour des fluides à faible densité tels que l'air, **caractérisée en ce que** ladite pale (1) présente un trou passant (5) dans lequel ledit bras (2) est inséré, et où ladite pale (1) se déplace le long du bras (2) avec un jeu déterminé par la distance (3) entre les bords du bras (2) et les bords dudit trou (5), et où ledit bras (2) présente une largeur variable et en particulier :
- une première partie (21) du bras (2) plus proche de l'axe de rotation (7) est plus étroite, permettant ainsi la variation de l'angle de pas γ de la pale (1),
- une deuxième partie extérieure (22) du bras est plus large, empêchant toute variation de l'angle de pas γ.

4. Turbine (A) selon la revendication 3, **caractérisée en ce que** ledit bras (2) comprend une partie ultérieure (23) avec des bords concordants et courbés, dont la largeur est telle que ladite pale (1) assume une seule position fixe avec un angle donné γ à une distance donnée X, sans osciller pendant la rotation.

5. Turbine (A) selon la revendication 2, pour des fluides à faible densité comme l'air, **caractérisée en ce que** ladite pale (1) se déplace le long du bras (2) en coulissant le long d'un guidage de section variable (9) réalisé dans ledit bras (2) dans la direction longitudinale d'extension du bras (2), et où ledit guidage présente une largeur variable et en particulier :
- une première partie (91) du guidage (9) plus proche de l'axe de rotation (7) est plus large, permettant ainsi la variation de l'angle de basculement γ de la pale (1),
- une seconde partie extérieure (92) du guidage (9) est plus étroite, empêchant toute variation de l'angle de pas γ.

6. Turbine (A) selon la revendication 5, **caractérisée en ce que** ledit guidage (9) comprend une troisième partie supplémentaire (93) avec des bords concordants et courbés, dont la largeur est telle que ladite pale (1) assume une seule position fixe avec un angle donné γ à une distance déterminée X de l'axe (7), sans osciller pendant la rotation.

7. Turbine (A) selon l'une des revendications de 3 à 6, **caractérisée en ce que** ladite pale (1) est bloquée sur le bras correspondant (2) et coulisse par rapport à celui-ci au moyen d'une pluralité de moyens mécaniques, tels que des roues, des guidages linéaires à recirculation de billes, des chariots, etc.

8. Turbine (A) selon la revendication 1, pour de l'eau ou des fluides ayant une densité similaire à celle de l'eau, **caractérisée en ce qu'**au moins une desdites pales (1) se déplace par translation dans une direction tangentielle par rapport à la circonférence déterminée par la rotation du bras correspondant (2) en raison de l'effet de la force fluidodynamique, et où l'angle de pas γ de ladite pale (1) varie en fonction dudit déplacement tangentiel, c'est-à-dire dudit angle de rotation ϑ de la pale (1) même.

9. Turbine (A) selon la revendication 8, **caractérisée en ce que** ledit bras (2) est muni d'un logement terminal (24) allongé dans la direction de S et comprenant un guidage (9') à l'intérieur duquel ladite pale (1) coulisse, et où ledit guidage (9') présente une section transversale variable et en particulier :
- une première section (91') plus éloignée du bord entrant de la pale (1) est plus large, permettant ainsi la variation de l'angle de pas γ de la pale (1) ;
- une deuxième section (92') plus proche du bord entrant de la pale (1) est plus étroite, empêchant toute variation de l'angle de pas γ.

10. Turbine (A) selon la revendication 9, **caractérisée en ce que** ledit guidage (9') comprend une troisième section supplémentaire (93') du guidage (9') avec des bords courbés et concordants, dont la largeur est telle que ladite pale (1) assume une position fixe unique avec un certain angle γ, étant donné une certaine vitesse de pointe ϑ', sans osciller pendant la rotation.

11. Turbine (A) selon l'une des revendications de 2 à 10, **caractérisée en ce qu'**au moins une desdites pales (1) est contrainte au bras correspondant (2) au moyen d'au moins un moyen de contraste (10) indiqué pour s'opposer à ladite translation radiale de la pale (1) dans la direction s'éloignant de l'axe (7) et/ou ledit déplacement tangentiel de la pale (1) par rapport à la circonférence déterminée par la rotation du bras correspondant (2).

12. Turbine (A) selon les revendications précédentes, pour des fluides de densité quelconque, **caractérisée en ce qu'**au moins une desdites pales (1) se déplace par translation :
- radialement le long du bras correspondant (2) en raison de l'effet de la force centrifuge, et où l'angle de pas γ de ladite pale (1) varie en fonction de la distance de la pale (1) elle-même par rapport audit arbre (7),
et aussi
- tangentiellement par rapport à la circonférence déterminée par la rotation du bras correspondant (2) en raison de la force fluidodynamique, et où l'angle de pas γ de ladite pale (1) varie en fonction dudit déplacement tangentiel, c'est-à-dire dudit angle de rotation ϑ de la pale (1).

13. Turbine (A) selon l'une quelconque des revendications précédentes, pour des fluides à densité quelconque, **caractérisée en ce qu'**elle comprend un jeu de cames (11) et de tirants rigides (12) reliés à ladite pale (1) et aptes à contrebalancer la force centrifuge agissant sur la pale (1).

14. Turbine (A) selon l'une quelconque des revendications précédentes, pour des fluides à densité quelconque, **caractérisée en ce qu'**elle comprend une pale auxiliaire supplémentaire (1') bloquée sur ledit arbre (7) dans une position proche de ladite pale (1), et où au moins une entre ladite pale (1) et ladite pale auxiliaire (1') est bloquée sur ledit bras correspondant (2) de sorte qu'il est possible de varier sélectivement l'angle de pas γ, c'est-à-dire l'angle d'inclinaison de la pale (1) par rapport à la direction principale dudit bras (2), et où chaque bras (2) est configuré de telle sorte que ledit angle de pas γ de chaque pale (1) varie en fonction de la distance X de la pale (1) elle-même par rapport audit arbre (7) et/ou en fonction du déplacement tangentiel ou de l'angle de rotation S de la pale (1) par rapport au bras correspondant (2).

15. Turbine (A) selon les revendications précédentes, pour fluide à densité quelconque, **caractérisée en ce que** chaque bras (2) comprend au moins un élément d'arrêt sélectif (8.a) indiqué pour limiter la translation de la pale (1) à une certaine distance X* jusqu'à une certaine valeur de seuil de la force centrifuge, et où, après avoir dépassé cette valeur de seuil, ledit élément d'arrêt sélectif (8.a) est configuré de manière à relâcher ladite pale (1) qui se déplace le long d'une portion (93) dudit guidage (9) configurée de manière à varier l'angle de pas γ de ladite pale (1) et la placer dans une position de frein fluidodynamique.

16. Turbine (A) selon les revendications précédentes, pour tout fluide à densité, **caractérisée en ce qu'**elle comprend des profils de raccordement (100) entre pales consécutives, de manière à standardiser le comportement des pales (1) en fonction des conditions de fonctionnement.
